# EUROPEAN PATENT SPECIFICATION

(11) **EP 2 454 009 B1**
(45) Date of publication and mention of the grant of the patent: **02.09.2015**
(21) Application number: 10743061.3
(22) Date of filing: 13.07.2010
(51) Int. Cl.: B01F 3/18, B01F 7/08, B01F 13/10, B01F 15/00, B01F 15/02, B01F 15/04, B29C 47/36, B01F 7/00, B01F 15/06

(54) **MIXER-DRYER**
MISCHTROCKNER
SECHOIR MALAXEUR

(30) Priority: 13.07.2009 EP 09165353
(43) Date of publication of application: 23.05.2012
(73) Proprietor: Vervant Limited, Dublin 2 (IE)
(72) Inventor: O'CALLAGHAN, James Joseph, County Louth (IE)
(74) Representative: Schütte, Gearoid
(86) International application number: PCT/EP2010/060087
(87) International publication number: WO 2011/006906

(56) References cited:
- EP-A1- 2 011 563
- EP-A2- 1 236 774
- EP-A2- 1 304 304
- DE-A1- 2 942 325
- IE-A1- 980 459
- US-A- 5 527 107
- US-A- 5 899 391
- US-B1- 6 203 184

## Description

### Introduction

This invention relates to blenders.

The invention particularly relates to blenders for the controlled mixing and delivery of particulate blend additives into a material processing line, for extruding plastics material for example. Examples of such blenders are to be found in our previous patent no's: US6,155,709 and US6,203184. A problem can arise in handling low bulk density materials such as regrind flake in accurately mixing and feeding material mixtures containing such low bulk density materials. Further, such blenders are commonly used for batch production processes. It is therefore necessary to regularly clean out all the raw materials from a current batch production before setting up the blender for a new batch production run for another product. This is typically done manually. However, these blenders are often in somewhat inaccessible and elevated locations. Thus, cleaning can present a safety hazard to workers and there is also a danger that they will damage other machinery in gaining access to the blender for cleaning. Another problem that can arise is with regard to the moisture content of the ingredient raw materials. Typically dryers are provided upstream of a blender for drying the raw materials. However as the raw materials are delivered to and through the blender the moisture content can increase due to contact with ambient air. This is undesirable and adversely affects production quality.

The present invention is directed towards overcoming these problems.

EP-2011563-A1 discloses a mixing dryer with a conical mixing chamber having a spherical floor and mixing paddles within the mixing chamber. A side wall of the mixing chamber can be heated for drying materials within the mixing chamber. DE-2942325-A1 discloses apparatus for mixing bulk materials comprising a cylindrical chamber with a mixer mounted within the chamber. An inlet and an outlet on the chamber allow delivery of hot air through the chamber for drying materials in the chamber. EP-1304304-A2 discloses a blender having an air operated material transfer device for controlling delivery of raw materials from a weigh hopper to a mixing chamber or for mixing raw materials in a mixing chamber of the blender. The blender may be adapted for handling heated material.

### Summary of the Invention

According to the invention there is provided a blender including;
a mixing chamber for reception of blend materials,
the mixing chamber having a material outlet,
a mixer mounted in the mixing chamber, said mixer being operable for mixing blend materials in the mixing chamber,
and a dryer apparutus provided in the mixing chamber,
characterised in that the dryer apparutus comprises a radiant heater mounted within the mixing chamber which is operable for regulating the moisture content of blend materials in the mixing chamber.

In an embodiment the radiant heater is an infra red heater.

In another embodiment a pair of infra-red heaters are mounted on a side wall of the mixing chamber and arranged to direct radiant heat at the material within the mixing chamber.

In another embodiment there is provided means for injecting gas into the mixing chamber or extracting gas from the mixing chamber for regulating the moisture content within the mixing chamber.

In another embodiment said means comprises a gas transfer manifold mounted on or within the mixing chamber having a number of openings communicating with the mixing chamber, said manifold being connected to a pump for injection or extraction of gas to or from the mixing chamber through the manifold.

In another embodiment a controller operably connected to the radiant heater for regulating the moisture content of blend materials within the mixing chamber.

In another embodiment the controller is operably connected to the mixer for regulating the speed of the mixer to control the moisture content of blend materials in the mixing chamber.

In another embodiment a moisture content sensor is mounted within the mixing chamber and the radiant heater is operable in response to the sensed moisture content to maintain blend materials within the mixing chamber at a pre-set desired moisture content.

In another embodiment a sliding valve plate is mounted at the material outlet of the mixing chamber, an actuator connected to the valve plate being operable to slide the valve plate between an open position and a closed position across the material outlet.

In one embodiment of the invention there is provided a blender including a chamber for reception of blend materials, the chamber having a material outlet, a material feeder for delivering blend materials from the chamber to the outlet, a baffle, said baffle mounted in the chamber at the outlet, adjacent the outlet but spaced-apart from the outlet, the material feeder having a discharge portion which is mounted between the baffle and the outlet.

In another embodiment the feeder is a feed screw.

In another aspect the invention provides a blender having a weigh hopper above the mixing chamber for weighing a batch of raw material and delivering said batch to the mixing chamber, a material level sensor being located above the material in the mixing chamber below the weigh hopper, the level sensor being operable to provide a continuous reading of the material level in the mixing chamber. This may be used to measure the material remaining in the mixing chamber at any point in time. From this data a continuous measurement can be made of the material usage of the process being fed from the outlet of the blender.

Beneficially this reading can be referenced to the absolute material usage calculation available by summing the weight of each batch being weighed by the blender from time to time.

In another aspect, the invention provides a blender having a plurality of material handling or storage compartments, one or more cleaning air jets being provided at each compartment, said air jets being operable to direct material towards an outlet of the compartment, means for connecting said cleaning air jets to a pressurised air supply, and valve means to control delivery of pressurised air to each cleaning air jet.

### Brief Description of the Drawings

The invention will be more clearly understood by the following description of some embodiments thereof with reference to the accompanying drawings, in which:
Fig. 1 is an exploded perspective view of a blender;
Fig. 2 is a detail elevational view of portion of the blender of Fig. 1;
Fig. 3 is a plan view of a baffle portion of the blender of Fig. 1;
Fig. 4 is a plan view of another baffle;
Fig. 5 is a plan view of the baffle shown in Fig.4 mounted in the blender of Fig.1;
Fig. 6 is a schematic sectional elevational view of another blender;
Fig. 7 is an elevational view of another blender;
Fig.8 is a schematic illustration of a cleaning system for the blender;
Fig. 9 is a further elevational view of the blender shown in Fig. 7;
Fig. 10 is a side elevational view of the blender shown in Fig. 7;
Fig. 11 is a perspective view of the blender shown in Fig. 7;
Fig. 12 is plan view of the blender shown in Fig. 7;
Fig. 13 is a partially sectioned elevational view of another blender;
Fig. 14 is a schematic sectional elevational view of a further blender;
Fig. 15 is a schematic sectional elevational view of a blender according to the invention;
Fig. 16 is a view similar to Fig. 15 showing a blender according to a further embodiment of the invention;
Fig. 17 is a schematic sectional elevational view of portion of another blender; and
Fig. 18 is a schematic sectional elevational view of another blender according to the invention.

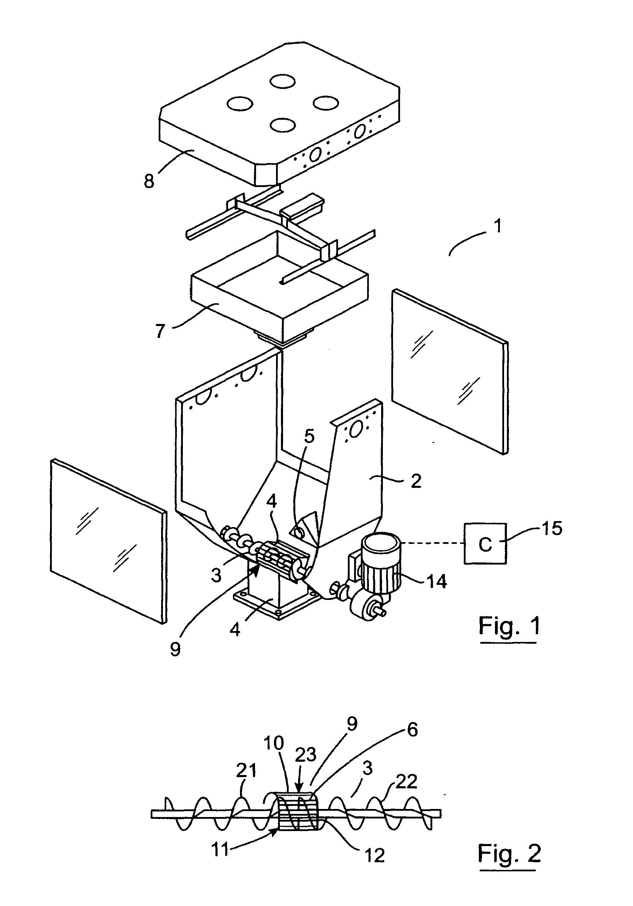

The blenders described in Figs. 1 to 14 inclusive do not form part of the invention, but represent art being useful for understanding the invention.

Referring to the drawings, and initially to Figs. 1 and 2 thereof, there is illustrated a blender indicated generally by the reference numeral 1. The blender 1 is largely similar to our blender described in European Patent Specification No. 0 911 130. The blender 1 has a mixing chamber 2 for reception of materials to be blended. A mixing screw 3 is mounted at a bottom of the mixing chamber 2 adjacent an outlet 4 of the mixing chamber 2 for circulation and mixing of materials within the mixing chamber 2 prior to discharge through the outlet 4. A material level sensor 5 is mounted within the chamber 2 above the screw 3. The level sensor 5 is connected to a controller 15 which is operable to regulate the supply of fresh materials from a weigh hopper 7 to the mixing chamber 2 for mixing. A number of raw material supply bins (not shown) are mounted above a support platform 8 located above the weigh hopper 7 for feeding selected raw material ingredients to the weigh hopper 7. In accordance with the present invention a baffle grating 9 is mounted at the outlet 4, extending closely around the mixing screw 3. The baffle grating 9 is such that it tends to inhibit upward movement of material at the outlet 4, thus tending to cram material into the outlet 4.

The baffle grating 9 essentially comprises a number of spaced-apart substantially parallel bars 10 mounted between a pair of arcuate end members 11, 12. The baffle grating 9 is fixed to the wall of the chamber 2 at opposite sides of the outlet 4.

The mixing screw 3 has a pair of opposed screw blades or paddles 21, 22 which are operable to direct material inwardly from each end of the mixing screw 3 to a central portion 23 of the mixing screw 3, said central portion 23 being located at the material outlet 4. Thus, the mixing screw 3 moves material inwardly from each end of the mixing screw 3 or mixing chamber 2 towards the outlet 4, some of the material then falling through the outlet 4 and the rest of the material being urged upwardly by following material for recirculation upwardly and then outwardly for feeding again by the mixing screw 3 towards the outlet 4. The provision of the baffle grating 9 resists the upward movement of the material at the outlet 4 and thus has a cramming action on the material at the outlet 4. The openings 6 between the bars 10 of the baffle grating 9 are such as to allow the normal mixing action of the blender 1 to occur, while at the same time increase the downward pressure of the mixed material through the outlet 4 of the mixing chamber 2. Advantageously this allows the blender 1 to be used for mixing and feeding greater amounts of low bulk density material such as regrind flake. This provides both a financial and an ecological benefit to the user. The cramming action provided by the baffle grating 9 can be adjusted by adjusting the spacing between the bars 10 and by adjusting the height of the baffle above the screw 3. The cramming action can also be improved and controlled by varying the speed of the mixing screw 3. Adjustment of the mixing screw 3 speed may also be used to vary the feed rate of blended material discharged through the outlet 4 thus combining blending and feed rate control.

It will be noted also that when the mixing screw 3 is stopped material will not flow by gravity through the outlet 4 as the baffle grating 9 may be designed to prevent this flow. Thus, the baffle grating 9 enables the flow of material to be stopped without intervention of some form of stop valve or gate as would otherwise be the case. Further, short term reversing of the mixing screw 3 enhances this feature by removing material below the baffle grating 9 from the vicinity of the outlet 4.

A drive motor 14 is driveably connected to the mixing screw 3. The drive motor 14 is connected to an associated controller 15 for controlling operation of the drive motor 14. This controller 14 is operable to control the speed of the drive motor 14.

In use, a batch of material to be blended is weighed in the weigh hopper 7 and then discharged when required into the mixing chamber 2. Within the mixing chamber 2, the mixing screw 3 circulates the material within the mixing chamber 2 to mix the material. The material is delivered inwardly from each end of the mixing screw 3 and then tends to push upwardly and outwardly for mixing and downwardly through the outlet 4. The upward movement is resisted somewhat by the baffle grating 19 which tends to cram material at the outlet 4 for feeding into a process line.

It is envisaged that a separate mixer might be provided within the mixing chamber 2 above the mixing screw 3 for added mixing of the material. In this case, it may be possible to provide the baffle 9 as an arcuate sheet mounted across the outlet opening 4 to prevent any upward movement of material from the mixing screw 3 to further enhance the downward cramming action as the material is delivered towards the outlet 4 by the mixing screw 3.

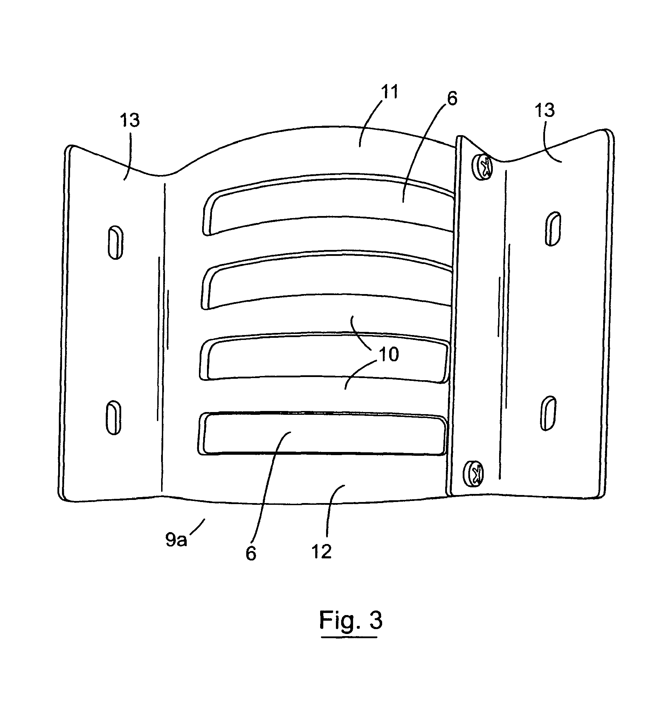

Referring now to Fig.3, there is shown another baffle 9a which is largely similar to the baffle 9 shown in Fig.1 and Fig.2. In this case however the bars 10 have the same arcuate shape as the end members 11, 12 and are generally parallel thereto. Flanges 13 at each side of the baffle 9a are bolted to a side wall of the mixing chamber 2 to mount the baffle 9a in the mixing chamber 2.

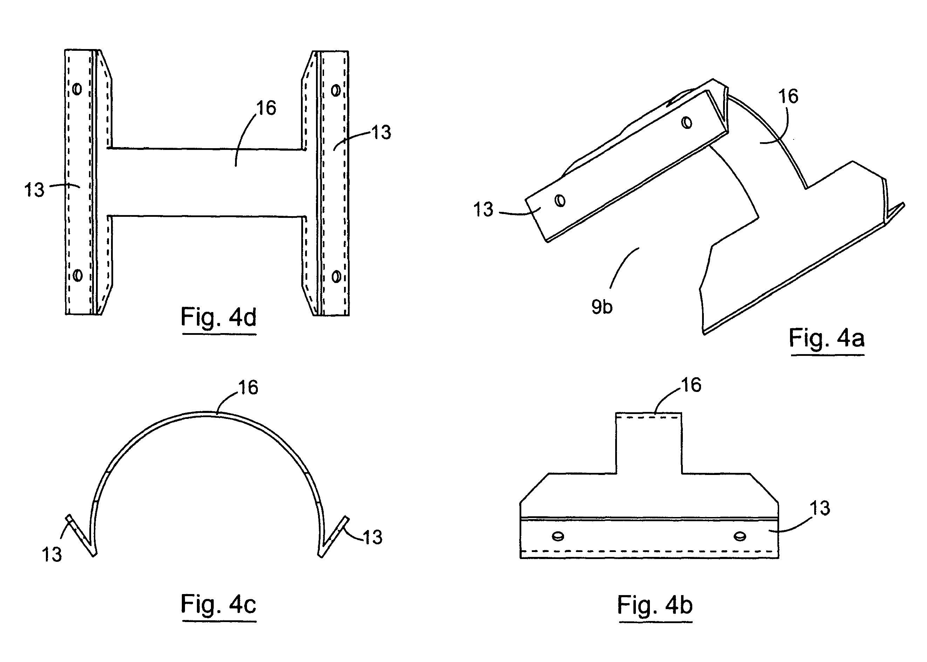

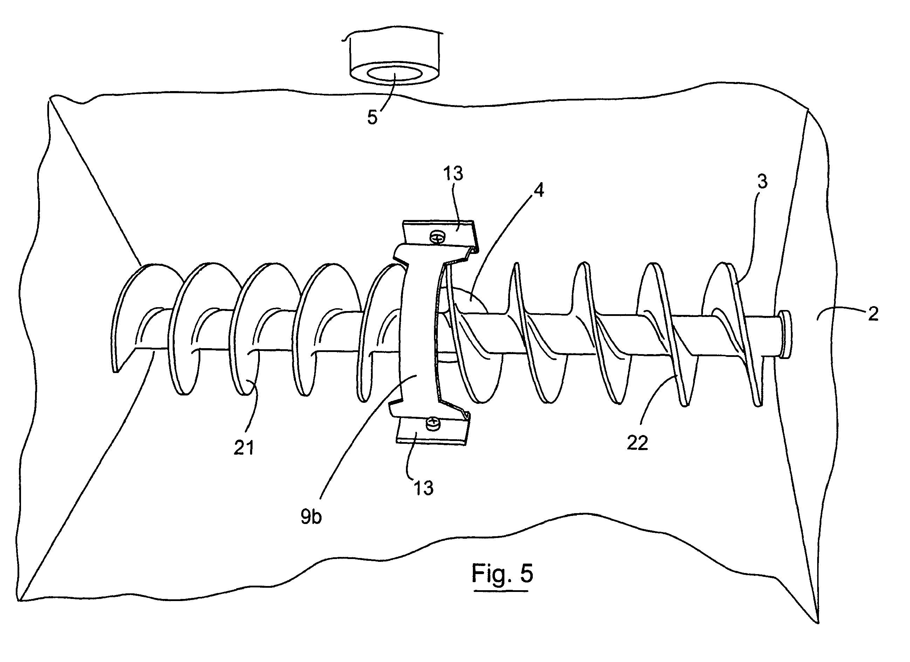

Referring now to Fig.4 and Fig.5, there is shown another baffle 9b. In this case the baffle 9b forms a single arcuate band 16 which curves around the mixing screw 3 above the mixing screw 3 at the opening 4 as illustrated in Fig.5. The baffle 9b is mounted centrally above the outlet 4 and is narrower than the outlet opening 4.

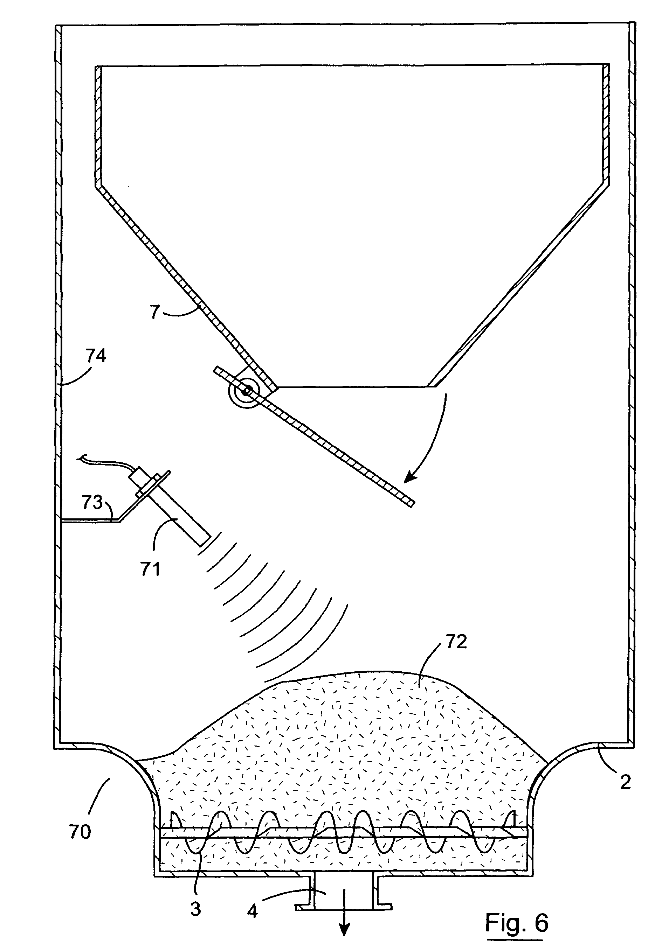

Referring to Fig. 6, there is shown another blender 70. Parts similar to those described previously are assigned the same reference numerals. The blender 70 has a weigh hopper 7 above the mixing chamber 2 for weighing a batch of raw material and delivering said batch when required to the mixing chamber 2 for mixing and subsequent discharge through the outlet 4 into a process line. In this case a level sensor 71 with a continuous read-out is mounted within the mixing chamber 2 by means of a mounting bracket 73 attached to a side wall 74 of the mixing chamber 2. Conveniently the level sensor 71 is an ultrasonic sensor (however other level sensing means could also be used). The level sensor 71 is operably connected to the controller 15. The level sensor 71 is used to measure the amount of material 72 in the mixing chamber 2 at any point in time. This measured amount changes as material 72 leaves the mixing chamber and is consumed by the process being fed by the blender 70. Using the consumption of material calculated after each batch made by the blender has a reference, the level sensor 71 read-out be can then be beneficially used to provide a rapid continuous read-out of consumption of material by the process between batches which may allow faster control of the process.

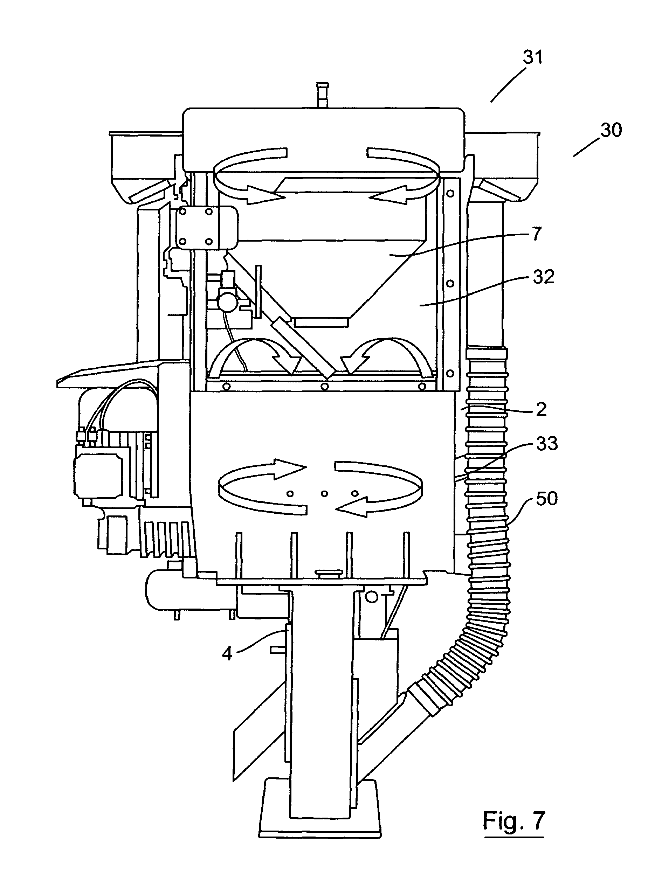

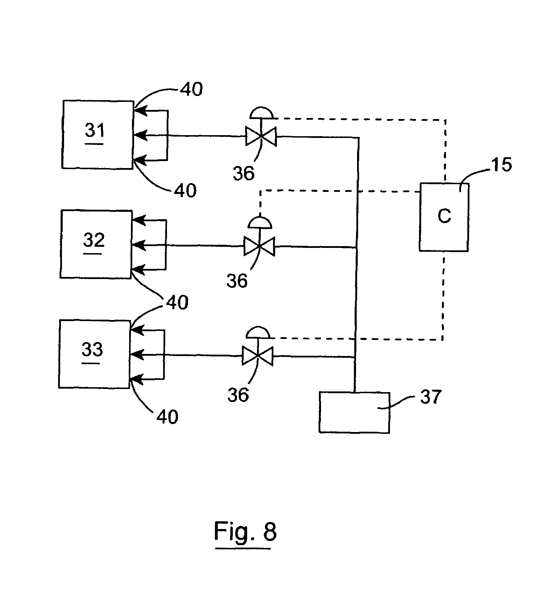

Referring now to Figs. 7 to 12 there is illustrated another blender indicated generally by the reference numeral 30. Parts similar to those described previously are assigned the same reference numerals. The blender 30 has a number of material handling compartments in three main sections, namely an upper section 31, a central section 32 and a lower section 33. The upper section 31 comprises a number of raw material storage bins 35 mounted on the platform 8 above the weigher 7. The central section 32 comprises the central portion of the blender 30 between the weigher 7 and the mixing chamber 2. The lower section 33 comprises the mixing chamber 2 of the blender 30. A number of cleaning air jets 40, only some of which are shown, are provided at each compartment. Fig. 8 shows the air jets 40 arranged for the storage bins 35. These air jets 40 are operable to direct material within the storage bins 35 towards an outlet of the storage bins 35 for cleaning out the storage bins 35. The jets 40 are connected to a pressurised air supply via a purge actuator 42 which acts as a valve to switch on and off the pressurised air supply to the jets 40. Advantageously the air supply will be connected to an air accumulator mounted adjacent to the air discharge source thus providing maximum air volume for cleaning.

Separate actuators 42 are provided for each section 31, 32, 33 so that a sequential cleaning of the blender 30 may be achieved from top to bottom. These actuators 42 may be connected to the controller 15 which controls operation of the cleaning cycle. It will be appreciated that the air jets 40 are arranged to clean away accumulated material or dust within the various material storage compartments supplying the blender 30. If desired, the air jets 40 may be pulsed for greater effect.

Fig.8 shows the arrangements schematically valves 36 controlling supply of pressurised air from a pressurised air source 37 to the air jets 40 are connected to the controller 15 for controlling operation of the air jets 40 as required.

In use, the blender 30 is operated as normal. When it is necessary to change the raw materials in the supply bins 35 for a different process the bins 35 are evacuated and the air jets 40 operated to clean out any residual dust or material from the storage bins and the rest of the blender 30. The drains 55 may be used both to drain the material and exit residual dust during the cleaning processes referred to above.

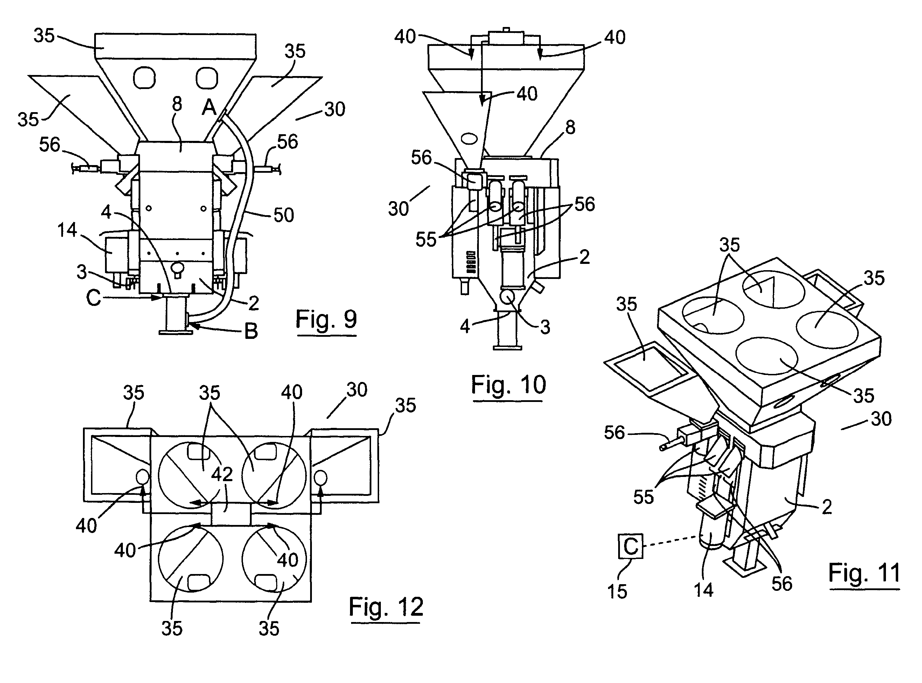

Referring in particular to Figs. 7 and 9, a raw material bypass line 50 is connected between a raw material storage bin 35 and the outlet 4 so that raw material may be fed directly from the storage bin 35 to the outlet 4 and hence in to the process line during the cleaning cycle. This material flow may be controlled by a ram operated slide gate valve mounted at either location A (Fig 9) on the storage bin 35 at the inlet of the bypass line 50, or location B (Fig 9) at an outlet end of the bypass line 50. A blender discharge stop valve C (Fig 9) may also be mounted at the outlet 4 upstream of the outlet of the bypass line 50 to control discharge of blended material from the blender mixing chamber 2 into the process line. This valve C may also be conveniently ram operated. The slide gate valve C may be used to close off the flow of material from the next recipe within the mixing chamber 2 until the new recipe is sufficiently mixed by the mixing screw 3. Only then will the mixed material be allowed to enter the process line by opening the slide gate valve C.

Advantageously, the process may be completely automated thus allowing complete order/recipe changes without interrupting or stopping the process, while avoiding cross-contamination of materials between recipes because of the automated cleaning and bypass systems mentioned above. All the various valves for controlling the flow of material through the blender may have their operating rams connected to the controller 15 for appropriate control and operation of the valves.

Drain chutes 55 are provided for easy drainage of raw materials from the various storage bins 35. A ram operated slide valve is provided at an inlet to each of these chutes 55 and these can be operated by the controller 15 to ensure quick and complete drainage of raw materials from the various storage bins 35. Pressurised air may be blown up these chutes 55 to dislodge any remaining particles to ensure that all the material is drained out of the storage bins 35.

Ram actuators 56 are operable by the controller 15 for opening and closing the slide valves on the drain chutes 55. Pipes may be fitted to the drain chutes 55 to transport the raw materials from the storage bins 35 to a remote collecting station for re-use.

It will be appreciated that the various cleaning and drainage features of the present invention allow a blender to be readily, easily and quickly changed over between different processes. Also the various cleaning and draining operations can be synchronised and controlled from a remote location as required and may be at ground floor level thus avoiding the necessity of operators accessing elevated parts of the process for blender cleaning purposes which improves health and safety considerations.

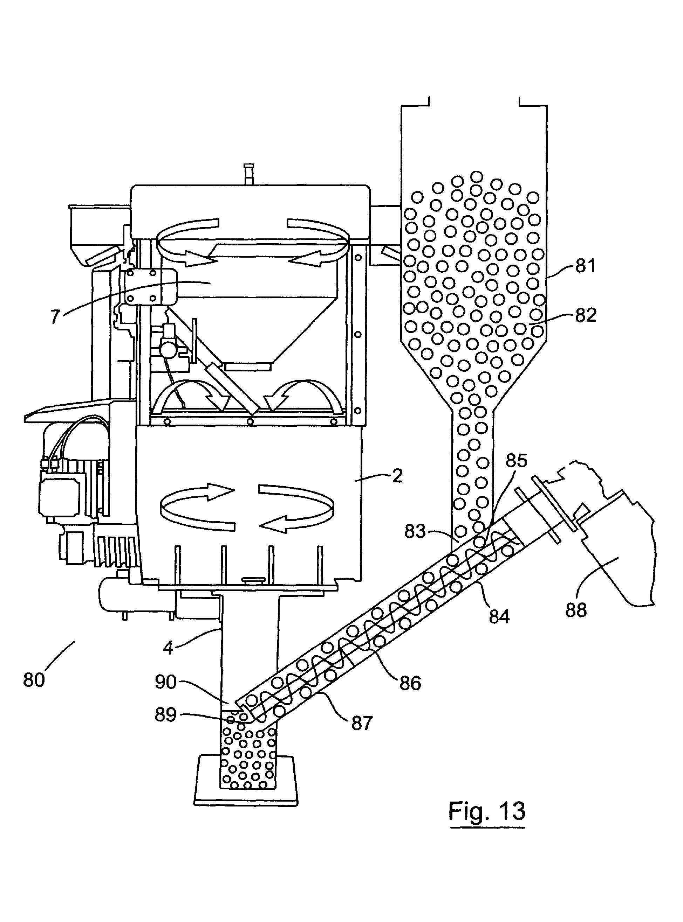

Fig. 13 illustrates another blender 80. Parts similar to those described previously are assigned the same reference numerals. In this case a storage bin 81 of low bulk density material 82 is provided. An outlet 83 of the storage bin 81 discharges into an auger crammer 84 at an inlet 85 thereof. The auger crammer 84 has a screw 86 rotatably driven in an associated housing 87 by a drive motor 88. An outlet 89 of the auger crammer 84 discharges into an outlet duct 90 below the blender mixing chamber 2 material outlet 4 extending outwardly and downwardly from the outlet 4 for connection to a process line. Operation of the auger crammer 84 crams the low bulk density material into the duct 90.

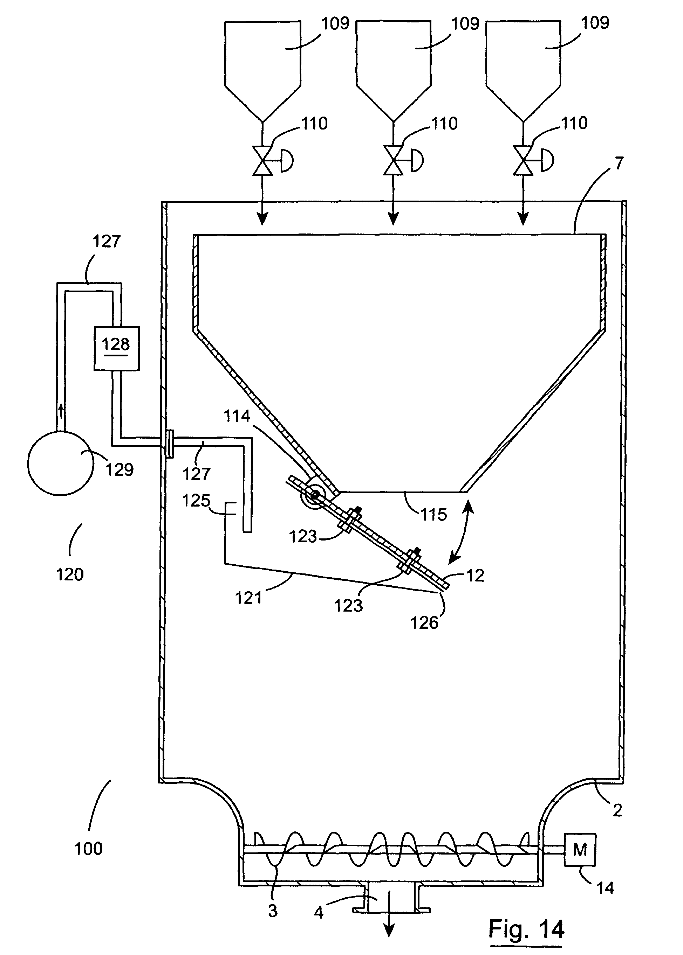

Referring to the Fig. 14 there is illustrated a batch blender indicated generally by the reference numeral 100. The blender 100 has a mixing chamber 2 for reception of ingredient materials to be blended. A mixing screw 3 driven by a motor 14 is rotatably mounted at the bottom of the mixing chamber 2. The mixing screw 3 is operable for circulation of ingredient material within the mixing chamber 2 for mixing the ingredient materials prior to discharge through an outlet 4 of the mixing chamber 2 into a processing line for example.

A weigh hopper 7 is suspended directly above the mixing chamber 2. A top of the weigh hopper 7 is open to receive dry ingredient materials from one or more dry ingredient material supply bins 109 mounted above the weigh hopper 7. Discharge of material from each bin 109 is through a control valve 110 which allows selection of one or more of the raw materials and controls the amount of raw material delivered to the weigh hopper 7 to form each batch of dry ingredient materials. Each control valve 110 is operably connected to the controller 15 which regulates operation of the control valves 110.

A dump flap 12 is mounted by a hinge 114 at an outlet 115 of the weigh hopper 7. This dump flap 12 can be pivoted by a ram or other means between a raised closed position sealing the outlet 115 and a lowered open position as shown in Fig. 14 for delivery of a batch of dry ingredient materials from the weigh hopper 7 to the mixing chamber 2.

Means, indicated generally by the reference numeral 120 is provided for delivering a measured quantity of a liquid ingredient material into the mixing chamber 2 with an associated measured batch of dry ingredient materials. This means 120 includes a liquid holding vessel 121 mounted on an underside of the dump flap 12, by bolts 123 for example. The liquid holding vessel 121 has an inlet 125 and an outlet 126. A liquid supply pipe 127 mounted on a side wall of the mixing chamber 2 and extending through the inlet 125 at a top of the liquid holding vessel 121 delivers a liquid ingredient material into the liquid holding vessel 121 through the inlet 125. A flow controller 128 is mounted in the supply line 127 to control delivery of liquid from a liquid source or reservoir 129 into the liquid holding vessel 121. The flow controller 128 may for example be a peristaltic pump. However, any other form of flow controller 128 which can be electrically controlled could alternatively be used. What is required is to be able to deliver a measured quantity of liquid into the liquid holding vessel 121 for subsequent delivery to the mixing chamber 2.

It will be noted that when the dump flap 12 is closed liquid is collected in the liquid holding vessel 121 which is in a filling position. When the dump flap 12 is opened as shown in the drawing the liquid holding vessel 121 is then moved into a pouring position for pouring liquid contents from the liquid holding vessel 121 through the outlet 126 into the mixing chamber 2 at the same time as the dry ingredient materials are being dumped from the weigh hopper 7 into the mixing chamber 2.

The various controls for forming a batch of selected dry ingredient materials in the weigh hoppers and for regulating delivery of batches into the mixing chamber 2 are as described in EP 0911130. Similar controls can be provided for matching a desired quantity of liquid ingredient material with a measured batch of dry ingredient materials.

In use, selected dry ingredient materials are delivered sequentially into the weigh hopper 7 according to a preset recipe. Similarly a liquid ingredient material is collected in the liquid holding vessel 121 in the required quantity corresponding to the batch of selected dry ingredient materials. Upon discharge of the batch of dry ingredient materials from the weigh hopper 7 into the mixing chamber 2 by opening the dump flap 12 the liquid ingredient in the liquid holding vessel 121 is also poured into the mixing vessel 2 with the dry ingredient materials for mixing prior to discharge through the outlet 4 into the process line.

During a material "fill cycle" each selected dry ingredient material is sequentially filled into the weigh hopper 7 as described in EP 0911130 and the liquid additive material is also filled via the flow controller 128 into the liquid holding vessel 121. The fill time or rate of each ingredient material may be varied for both the dry and liquid ingredients to achieve a desired blend ratio according to a preset recipe. When material is required for mixing by the process the weigh hopper 7 dump mechanism operates as normal discharging the dry ingredient materials from the weigh hopper 7 into the mixing chamber 2 and simultaneously discharging the liquid ingredient material from the liquid holding vessel 121 through the outlet 126 into the mixing chamber 2.

It will be appreciated that conventional batch blenders may be readily easily modified to incorporate the apparatus for adding liquid ingredient materials to the mixing chamber 2.

The liquid holding vessel 121 may be demountable for cleaning purposes if desired.

In an alternative arrangement it is envisaged that the liquid holding vessel 121 may be provided with a separate discharge valve for example a solenoid controlled valve.

Advantageously it is possible to feed liquid ingredient materials and to weigh same in a similar manner to the dry ingredient materials.

### Detailed Description of Preferred Embodiments of the Invention

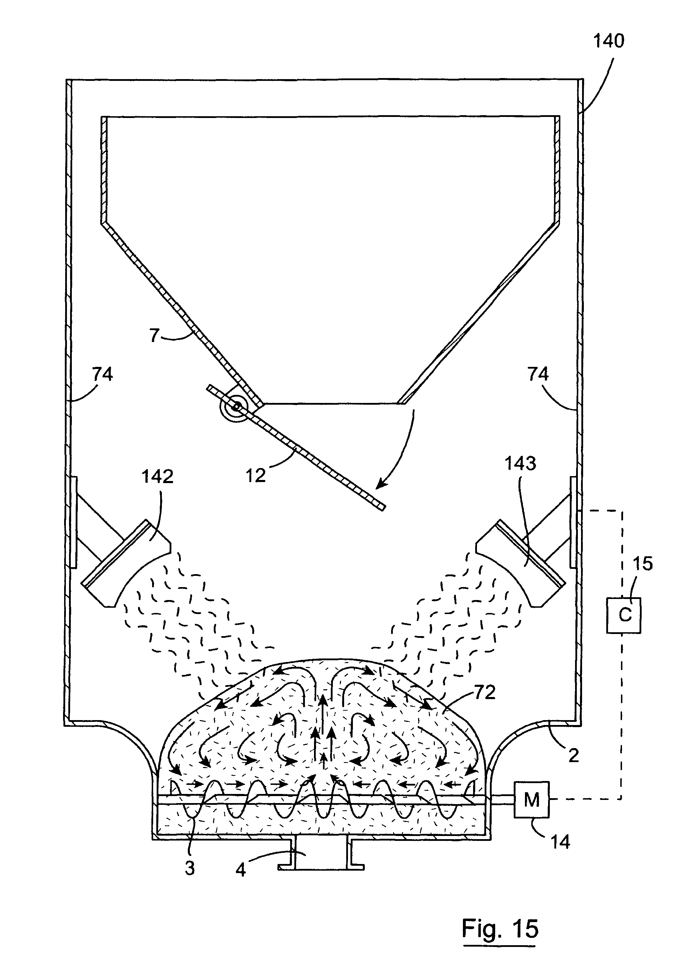

Referring now to Fig. 15 there is illustrated a blender according to the invention indicated generally by the reference numeral 140. Parts similar to those described previously are assigned the same reference numerals. The circulation of the material 72 for mixing by means of the mixing screw 3 is shown in the drawing. A pair of infrared heaters 142, 143 is mounted on the side wall 74 of the mixing chamber 2 and arranged to direct radiant heat at the material 72 within the mixing chamber 2. As the material 72 is exposed to heat and re-circulated by the mixing screw 3 this will reduce the moisture content of the material 72 to a desired level. Ideally the heaters 142, 143 are operably connected to the controller 15 which is operable to control the heat input to the material 72 and also optionally to control the speed of the motor 14 operating the mixing screw 3 to control the drying rate and time. Thus it will be appreciated that accurate control of the moisture content of the material 72 immediately before it is injected into a process line can be achieved.

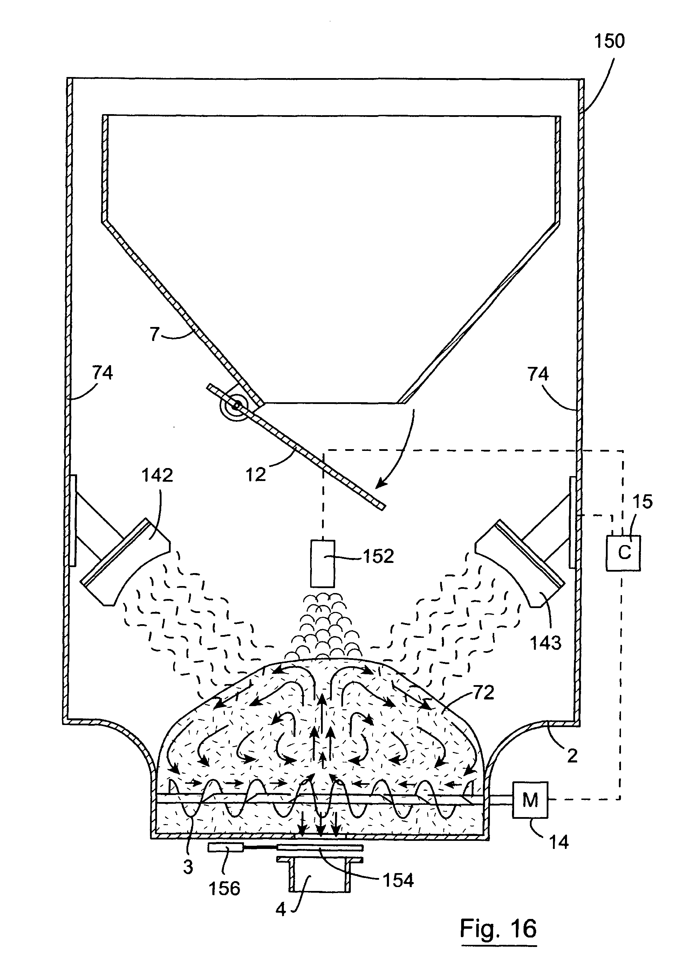

Referring now to Fig.16 there is shown another blender according to the invention indicated generally by the reference numeral 150. Parts similar to those described previously are assigned the same reference numerals. This is largely similar to the blender described previously with reference to Fig. 15. In this case a moisture content sensor 152 is mounted within the mixing chamber 2. This further aids in the accurate control of the moisture content of the material 72. The moisture content sensor 152 is connected to the controller 15 in order to control the drying rate and time, by adjusting the power of the heaters 142, 143 and/or the speed of the motor 14 as previously mentioned. The power of the heaters 142, 143 and the motor speed may be varied depending on the measured moisture content when compared to a set point error detected.

A sliding valve plate 154 can be mounted across the outlet 4 to control discharge of the materials 72 into a process line. The valve plate 154 is operable by a ram or solenoid actuator 156 for movement between open and closed positions.

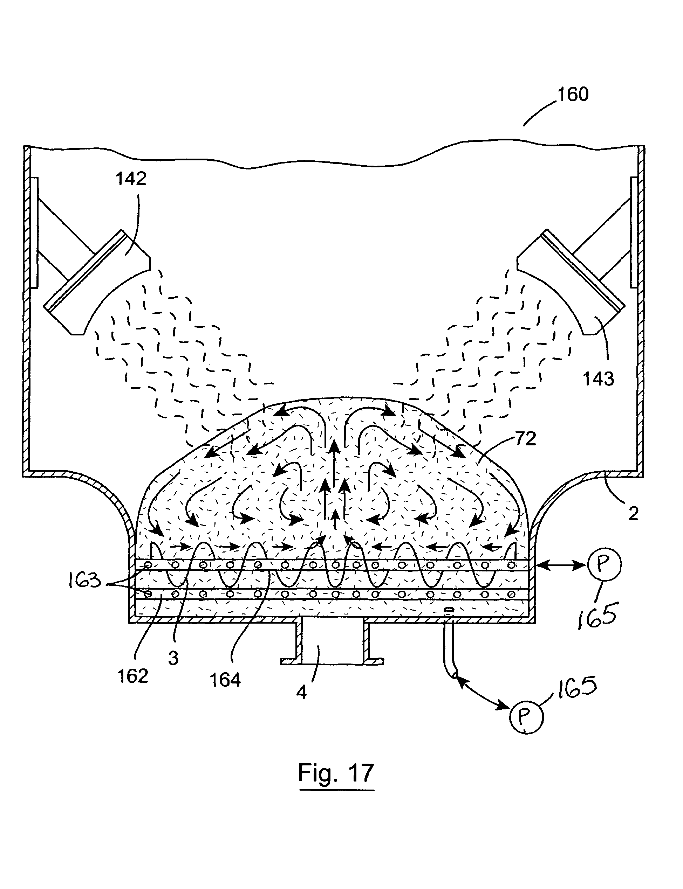

Referring now to Fig. 17 there is shown a portion of another blender according to the invention indicated generally by the reference numeral 160. Parts similar to those described previously are assigned the same reference numerals. In this case a manifold 162 may be mounted at the bottom of the mixing chamber 2. The manifold 162 has a number of through holes 163 for through passage of air or gas either into or out of the mixing chamber 2, again for controlling the moisture content of the interior of the mixing chamber 2 with a view to regulating the moisture content of the material 72. For convenience the manifold 162 may be integrally formed with a shaft 164 of the mixing screw 3 and/or a separate manifold may be mounted within the mixing chamber 2 as shown in the drawing.

A pump 165 or vacuum source is connected to the manifold 162, 164 to inject or extract the air or gas.

It will be noted that the mixing chamber 2 may be sealed and either a vacuum or pressurised air applied to an interior of the mixing chamber 2 with a view to excluding exterior air from the mixing chamber 2 which would adversely affect the moisture content of the material 72 within the mixing chamber 2.

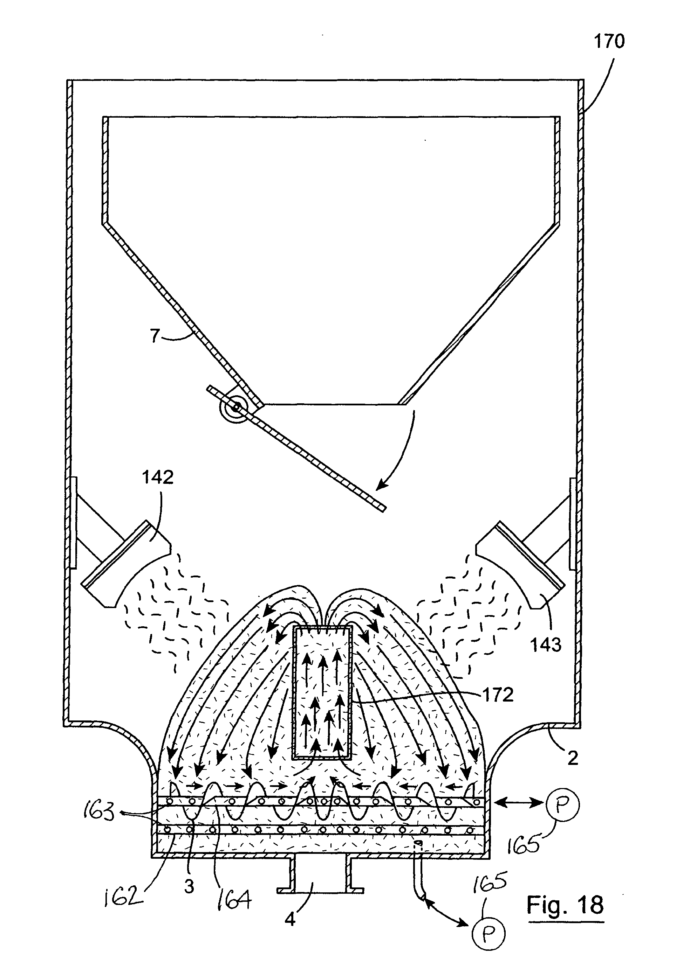

Referring now to Fig 18 there is shown another blender according to the invention indicated generally by the reference numeral 170. Parts similar to those described previously are assigned the same reference numerals. In this case a tubular feed controller 172 is mounted in an upright position centrally in the mixing chamber 2 immediately above the centre of the mixing screw 3 and above the outlet 4 of the mixing chamber 2. As material is directed inwardly and upwardly by the mixing screw 3 it travels upwardly through the feed controller 172, cascading outwardly and downwardly for recirculation by the mixing screw 3. The feed controller 172 may be of hollow construction and have holes in the side wall to form a manifold for the injection or extraction of air or gas to control the moisture content of the material 72 within the mixing chamber 2.

## Claims

1. A blender (140), including;
a mixing chamber (2) for reception of blend materials (72),
the mixing chamber (2) having a material outlet (4),
a mixer (3) mounted in the mixing chamber (2), said mixer (3) being operable for mixing blend materials (72) in the mixing chamber (2),
and a dryer apparatus provided in the mixing chamber,
**characterised in that** the dryer apparatus comprises a radiant heater (142, 143) mounted within the mixing chamber (2) which is operable for regulating the moisture content of blend materials (72) in the mixing chamber (2).

2. The blender (140) as claimed in claim 1 wherein the radiant heater is an infra red heater (142, 143).

3. The blender (140) as claimed in claim 2 wherein a pair of infra-red heaters (142, 143) is mounted on a side wall (74) of the mixing chamber (2) and arranged to direct radiant heat at the material (72) within the mixing chamber (2).

4. The blender (160) as claimed in any preceding claim wherein there is provided means (162) for injecting gas into the mixing chamber (2) or extracting gas from the mixing chamber (2) for regulating the moisture content within the mixing chamber (2).

5. The blender (160) as claimed in claim 4 wherein said means comprises a gas transfer manifold (162) mounted on or within the mixing chamber (2) having a number of openings (163) communicating with the mixing chamber (2), said manifold (162) being connected to a pump (165) for injection or extraction of gas to or from the mixing chamber (2) through the manifold (162).

6. The blender (140) as claimed in any preceding claim including a controller (15) operably connected to the radiant heater (142, 143) for regulating the moisture content of blend materials (72) within the mixing chamber (2).

7. The blender (140) as claimed in claim 6 wherein the controller (15) is operably connected to the mixer (3, 14) for regulating the speed of the mixer (3,14) to control the moisture content of blend materials (72) in the mixing chamber (2).

8. The blender (150) as claimed in any preceding claim wherein a moisture content sensor (152) is mounted within the mixing chamber (2) and the radiant heater (142, 143) is operable in response to the sensed moisture content to maintain blend materials (72) within the mixing chamber (2) at a pre-set desired moisture content.

9. The blender (150) as claimed in any preceding claim wherein a sliding valve plate (154) is mounted at the material outlet (4) of the mixing chamber (2), an actuator (156) connected to the valve plate (154) being operable to slide the valve plate (154) between an open position and a closed position across the material outlet (4).

10. The blender as claimed in any preceding claim including;
a chamber (2) for reception of blend materials,
the chamber (2) having a material outlet (4),
a material feeder (3) for delivering blend materials (72) from the chamber (2) to the outlet (4),
a baffle (9),
said baffle (9) mounted in the chamber (2), at the outlet (4), adjacent the outlet (4) but spaced-apart from the outlet (4),
the material feeder (3) having a discharge portion (23) which is mounted between the baffle (9) and the outlet (4).

11. The blender as claimed in claim 10 wherein the mixer (3) and the material feeder (3) are integral.

12. The blender as claimed in claim 10 or 11 wherein the feeder is a feed screw (3), the feed screw (3) having a pair of opposed screws (21, 22) which are operable to direct material inwardly from each end of the screw (3) to a central portion (23) of the screw (3), said central portion (23) being located at the material outlet (4).

13. The blender as claimed in any of claims 10 to 12 having a weigh hopper (7) above the mixing chamber (2) for weighing a batch of raw material (72) and delivering said batch to the mixing chamber (2), a material level senor (5,71) being located above the material (72) in the mixing chamber (2) below the weigh hopper (7), the level sensor (5,71) being operable to provide a continuous reading of the material level in the mixing chamber (2).

14. The blender as claimed in any of claims 10 to 13 wherein the blender has a plurality of material handling compartments (35), one or more cleaning air jets (40) being provided at each compartment (35), said air jets (40) being operable to direct material towards an outlet of the compartment (35), means for connecting said cleaning air jets (40) to a pressurised air supply (37), and valve means (36) to control delivery of pressurised air to each cleaning air jet (40).

## Patentansprüche

1. Mischvorrichtung (140), die Folgendes umfasst:
eine Mischkammer (2) für die Aufnahme von Mischungsmaterialien (72),
wobei die Mischkammer (2) einen Materialauslass (4) aufweist,
einen Mischer (3), der in der Mischkammer (2) angebracht ist, wobei der Mischer (3) wirksam ist, um Mischungsmaterialien (72) in der Mischkammer (2) zu mischen, und
eine in der Mischkammer vorgesehene Trocknervorrichtung,
**dadurch gekennzeichnet, dass** die Trocknervorrichtung einen in der Mischkammer (2) angebrachten Wärmestrahler (142, 143) umfasst, der wirksam ist, um den Feuchtegehalt von Mischungsmaterialien (72) in der Mischkammer (2) zu regulieren.

2. Mischvorrichtung (140) nach Anspruch 1, wobei es sich bei dem Wärmestrahler um eine Infrarotheizvorrichtung (142, 143) handelt.

3. Mischvorrichtung (140) nach Anspruch 2, wobei ein Paar Infrarotheizvorrichtungen (142, 143) an einer Seitenwand (74) der Mischkammer (2) angebracht ist und dazu angeordnet ist, Strahlungswärme auf das Material (72) in der Mischkammer (2) zu richten.

4. Mischvorrichtung (160) nach einem der vorangehenden Ansprüche, wobei ein Mittel (162) vorgesehen ist, um Gas in die Mischkammer (2) einzublasen oder Gas aus der Mischkammer (2) abzusaugen, um den Feuchtegehalt in der Mischkammer (2) zu regulieren.

5. Mischvorrichtung (160) nach Anspruch 4, wobei das Mittel ein Gasleitungs-Sammelrohr (162) umfasst, das an oder in der Mischkammer (2) angebracht ist und eine Anzahl von Öffnungen (163) umfasst, die mit der Mischkammer (2) in Verbindung stehen, wobei das Sammelrohr (162) mit einer Pumpe (165) verbunden ist, um Gas durch das Sammelrohr (162) in die oder aus der Mischkammer (2) einzublasen bzw. abzusaugen.

6. Mischvorrichtung (140) nach einem der vorangehenden Ansprüche, umfassend einen Kontroller (15), der wirksam mit dem Wärmestrahler (142, 143) verbunden ist, um den Feuchtegehalt von Mischungsmaterialien (72) in der Mischkammer (2) zu regulieren.

7. Mischvorrichtung (140) nach Anspruch 6, wobei der Kontroller (15) wirksam mit dem Mischer (3, 14) verbunden ist, um die Drehzahl des Mischers (3, 14) zu regulieren, um den Feuchtegehalt von Mischungsmaterialien (72) in der Mischkammer (2) zu steuern.

8. Mischvorrichtung (150) nach einem der vorangehenden Ansprüche, wobei ein Feuchtegehaltsensor (152) in der Mischkammer (2) angebracht ist und der Wärmestrahler (142, 143) als Reaktion auf den abgefühlten Feuchtegehalt wirksam ist, um Mischungsmaterialien (72) in der Mischkammer (2) auf einem voreingestellten gewünschten Feuchtegehalt zu halten.

9. Mischvorrichtung (150) nach einem der vorangehenden Ansprüche, wobei eine Gleitventilplatte (154) bei dem Materialauslass (4) der Mischkammer (2) angebracht ist, wobei ein mit der Ventilplatte (154) verbundener Stellantrieb (156) wirksam ist, um die Ventilplatte (154) zwischen einer offenen Stellung und einer geschlossenen Stellung über dem Materialauslass (4) zu schieben.

10. Mischvorrichtung nach einem der vorangehenden Ansprüche, die Folgendes umfasst:
eine Kammer (2) für die Aufnahme von Mischungsmaterialien,
wobei die Kammer (2) einen Materialauslass (4) aufweist,
eine Materialzuführvorrichtung (3) zum Fördern von Mischungsmaterialien (72) von der Kammer (2) zu dem Auslass (4),
ein Leitblech (9),
wobei das Leitblech (9) bei dem Auslass (4), benachbart dem Auslass (4) aber von dem Auslass (4) beabstandet in der Kammer (2) angebracht ist,
wobei die Materialzuführvorrichtung (3) einen Ausgabeabschnitt (23) aufweist, der zwischen dem Leitblech (9) und dem Auslass (4) angebracht ist.

11. Mischvorrichtung nach Anspruch 10, wobei der Mischer (3) und die Materialzuführvorrichtung (3) einstückig ausgebildet sind.

12. Mischvorrichtung nach Anspruch 10 oder 11, wobei es sich bei der Zuführvorrichtung um eine Zuführschnecke (3) handelt, wobei die Zuführschnecke (3) ein Paar einander gegenüberliegender Schnecken (21, 22) aufweist, die wirksam sind, um Material von beiden Enden der Schnecke (3) zu einem mittleren Abschnitt (23) der Schnecke (3) nach innen zu lenken, wobei sich der mittlere Abschnitt (23) bei dem Materialauslass (4) befindet.

13. Mischvorrichtung nach einem der Ansprüche 10 bis 12 mit einem Wiegetrichter (7) über der Mischkammer (2), um eine Charge Rohmaterial (72) zu wiegen und die Charge zu der Mischkammer (2) zu fördern, wobei sich ein Materialfüllstandssensor (5, 71) über dem Material (72) in der Mischkammer (2) unter dem Wiegetrichter (7) befindet, wobei der Füllstandssensor (5, 71) wirksam ist, um eine kontinuierliche Messung des Materialfüllstands in der Mischkammer (2) vorzusehen.

14. Mischvorrichtung nach einem der Ansprüche 10 bis 13, wobei die Mischvorrichtung Folgendes aufweist: mehrere Materialhandhabungsfächer (35), wobei ein oder mehrere Reinigungsluftdüsen (40) an jedem Fach (35) vorgesehen sind, wobei die Luftdüsen (40) wirksam sind, um Material zu einem Auslass des Fachs (35) zu lenken, Mittel zum Verbinden der Reinigungsluftdüsen (40) mit einer Druckluftversorgung (37) und Ventilmittel (36) zum Steuern der Förderung von Druckluft an jede Reinigungsluftdüse (40).

## Revendications

1. Mixeur (140), comprenant :
une chambre de mélange (2) à des fins de réception de matières à mixer (72),
la chambre de mélange (2) ayant une sortie pour matière (4),
un mélangeur (3) monté dans la chambre de mélange (2), ledit mélangeur (3) servant à mélanger des matières à mixer (72) dans la chambre de mélange (2),
et un appareil sécheur mis en oeuvre dans la chambre de mélange,
**caractérisé en ce que** l'appareil sécheur comporte un corps chauffant par rayonnement (142, 143) monté à l'intérieur de la chambre de mélange (2) qui sert à réguler la teneur en humidité des matières à mixer (72) dans la chambre de mélange (2).

2. Mixeur (140) selon la revendication 1, dans lequel le corps chauffant par rayonnement est un corps chauffant à infrarouge (142, 143).

3. Mixeur (140) selon la revendication 2, dans lequel une paire de corps chauffants à infrarouge (142, 143) est montée sur une paroi latérale (74) de la chambre de mélange (2) et est agencée pour diriger la chaleur par rayonnement sur la matière (72) à l'intérieur de la chambre de mélange (2).

4. Mixeur (160) selon l'une quelconque des revendications précédentes, dans lequel se trouve un moyen (162) servant à injecter du gaz dans la chambre de mélange (2) ou à extraire du gaz en provenance de la chambre de mélange (2) à des fins de régulation de la teneur en humidité à l'intérieur de la chambre de mélange (2).

5. Mixeur (160) selon la revendication 4, dans lequel ledit moyen comporte un collecteur de transfert de gaz (162) monté sur ou à l'intérieur de la chambre de mélange (2) ayant un nombre d'ouvertures (163) en communication avec la chambre de mélange (2), ledit collecteur (162) étant raccordé à une pompe (165) à des fins d'injection ou d'extraction du gaz jusque dans ou en provenance de la chambre de mélange (2) par le biais du collecteur (162).

6. Mixeur (140) selon l'une quelconque des revendications précédentes, comprenant un dispositif de commande (15) raccordé de manière fonctionnelle au corps chauffant par rayonnement (142, 143) à des fins de régulation de la teneur en humidité des matières à mixer (72) à l'intérieur de la chambre de mélange (2).

7. Mixeur (140) selon la revendication 6, dans lequel le dispositif de commande (15) est raccordé de manière fonctionnelle au mélangeur (3, 14) à des fins de régulation de la vitesse du mélangeur (3, 14) à des fins de contrôle de la teneur en humidité des matières à mixer (72) dans la chambre de mélange (2).

8. Mixeur (150) selon l'une quelconque des revendications précédentes, dans lequel un capteur de teneur en humidité (152) est monté à l'intérieur de la chambre de mélange (2) et le corps chauffant par rayonnement (142, 143) fonctionne en réponse à la teneur en humidité détectée pour maintenir les matières à mixer (72) à l'intérieur de la chambre de mélange (2) à une teneur en humidité souhaitée prédéterminée.

9. Mixeur (150) selon l'une quelconque des revendications précédentes, dans lequel une plaque de vanne coulissante (154) est montée au niveau de la sortie pour matière (4) de la chambre de mélange (2), un actionneur (156) raccordé au niveau de la plaque de vanne (154) servant à faire coulisser la plaque de vanne (154) entre une position ouverte et une position fermée en travers de la sortie pour matière (4).

10. Mixeur selon l'une quelconque des revendications précédentes, comprenant :
une chambre (2) à des fins de réception de matières à mixer,
la chambre (2) ayant une sortie pour matière (4),
un alimentateur de matières (3) servant à distribuer des matières à mixer (72) depuis la chambre (2) jusqu'à la sortie (4),
une chicane (9),
ladite chicane (9) étant montée dans la chambre (2) au niveau de la sortie (4), de manière adjacente par rapport à la sortie (4) mais espacée par rapport à la sortie (4),
l'alimentateur de matière (3) ayant une partie de décharge (23) qui est montée entre la chicane (9) et la sortie (4).

11. Mixeur selon la revendication 10, dans lequel le mélangeur (3) et l'alimentateur de matière (3) sont formés d'une seule pièce.

12. Mixeur selon la revendication 10 ou la revendication 11, dans lequel l'alimentateur est une vis d'avance (3), la vis d'avance (3) ayant une paire de vis opposées (21, 22) qui servent à diriger la matière vers l'intérieur depuis chaque extrémité de la vis (3) vers une partie centrale (23) de la vis (3), ladite partie centrale (23) étant située au niveau de la sortie pour matière (4).

13. Mixeur selon l'une quelconque des revendications 10 à 12, ayant une trémie de pesage (7) au-dessus de la chambre de mélange (2) servant à peser un lot de matière première (72) et à acheminer ledit lot jusque dans la chambre de mélange (2), un capteur de niveau de matière (5, 71) étant situé au-dessus de la matière (72) dans la chambre de mélange (2) sous la trémie de pesage (7), le capteur de niveau (5, 71) servant à fournir un relevé continu du niveau de la matière dans la chambre de mélange (2).

14. Mixeur selon l'une quelconque des revendications 10 à 13, dans lequel le mixeur a une pluralité de compartiments de manipulation de matière (35), un ou plusieurs jets d'air de nettoyage (40) étant mis en oeuvre au niveau de chaque compartiment (35), lesdits jets d'air (40) servant à diriger la matière vers une sortie du compartiment (35), un moyen servant à raccorder lesdits jets d'air de nettoyage (40) sur une alimentation en air sous pression (37), et un moyen de type vanne (36) servant à contrôler la distribution de l'air sous pression dans chaque jet d'air de nettoyage (40).
